(19) Europäisches Patentamt
European Patent Office
Office européen des brevets

(11) **EP 2 181 025 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(21) Anmeldenummer: **08803062.2**

(22) Anmeldetag: **15.08.2008**

(51) Int Cl.:
**B60T 8/1755** *(2006.01)*   **B60T 8/172** *(2006.01)*

(86) Internationale Anmeldenummer:
**PCT/EP2008/060771**

(87) Internationale Veröffentlichungsnummer:
**WO 2009/022014 (19.02.2009 Gazette 2009/08)**

(54) **SYSTEM UND VERFAHREN ZUM STABILISIEREN EINES KRAFTFAHRZEUGS**

SYSTEM AND METHOD FOR STABILIZING A MOTOR VEHICLE

SYSTÈME ET PROCÉDÉ POUR STABILISER UN VÉHICULE AUTOMOBILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.08.2007 DE 102007038850**
**12.08.2008 DE 102008038642**

(43) Veröffentlichungstag der Anmeldung:
**05.05.2010 Patentblatt 2010/18**

(73) Patentinhaber: **Continental Teves AG & Co. OHG 60488 Frankfurt (DE)**

(72) Erfinder:
• **GROITZSCH, Stephan**
**69469 Weinheim (DE)**

• **ENDERS, Christian**
**65182 Bad Soden (DE)**
• **STÖLZL, Stephan**
**69469 Weinheim (DE)**
• **STEINMEIER, Frank**
**65719 Hofheim (DE)**
• **FISCHER, Daniel**
**65824 Schwalbach (DE)**
• **SCHREINER, Otmar**
**64347 Griesheim (DE)**

(56) Entgegenhaltungen:
EP-A- 0 716 948       DE-A1- 10 247 994
DE-A1- 10 350 920     DE-A1- 19 533 575
DE-A1- 19 623 595     DE-A1- 19 623 596
DE-B3-102005 024 875

**Beschreibung**

**Technisches Gebiet**

Die Erfindung betrifft ein System zum Stabilisieren eines Kraftfahrzeugs. Ferner betrifft die Erfindung ein Verfahren zum Stabilisieren eines Kraftfahrzeugs, zu dessen Durchführung das System geeignet ist.

**Hintergrund der Erfindung**

Fahrdynamikregelsysteme, wie das bekannte ESP-System, das beispielsweise in der DE 195 15 051 A1 beschrieben wird, dienen dazu, ein Kraftfahrzeug in kritischen Fahrsituationen zu stabilisieren.
Derartige Systeme basieren üblicherweise auf einer Gierratenregelung. Dabei wird die aktuelle Gierrate des Fahrzeugs mittels eines Gierratensensors erfasst und mit einer Sollgierrate verglichen. Die Sollgierrate wird anhand eines Fahr- zeugmodells unter Heranziehung der Fahrzeuggeschwindigkeit und des von dem Fahrer an den lenkbaren Rädern des Fahrzeugs eingestellten Radeinschlagswinkels ermittelt. Fahrzeuggeschwindigkeit und Radeinschlagswinkel werden mit entsprechenden Sensoren erfasst. Überschreitet die Differenz zwischen der Sollgierrate und der gemessenen Gierrate betragsmäßig einen Schwellenwert, wird ein instabiler Fahrzustand festgestellt, und das Fahrzeug wird durch Eingriffe in das Fahrverhalten stabilisiert.
Die stabilisierenden Eingriffe in das Fahrverhalten umfassen Bremseneingriffe an einzelnen Rädern des Fahrzeugs. Bei Fahrzeugen mit hydraulischen Bremsanlagen wird zur Durchführung der Bremseingriffe eine in die Bremsanlage integrierte Hydraulikeinheit eingesetzt, die einen radindividuellen Bremsdruckaufbau ermöglicht. Je nachdem, ob ein übersteuerndes oder untersteuerndes Fahrzeugverhalten festgestellt worden ist, erfolgt der Bremseneingriff an einem Vorderrad oder einem Hinterrad, wenn es sich um ein vierrädriges Fahrzeug mit zwei Achsen handelt.
Aus der DE 195 33 575 A1 ist ein System zur Steuerung des Kurvenverhaltens eines Fahrzeugs bekannt, mit einer Einrichtung zur Ermittlung eines Schleuderparameters auf der Grundlage zumindest eines Betriebsparameters des Fahrzeugs, mit einer Einrichtung zum Erzeugen eines Antischleudermoments, und einer Steuereinrichtung, welche die Antischleudermoment-Erzeugungseinrichtung in Übereinstimmung mit dem Schleuderparameter ansteuert, wobei die Steuereinrichtung die Antischleudermoment-Erzeugungseinrichtung in Betrieb setzt, wenn der Schleuderparameter einen ihm zugeordneten Schwellenwert überschreitet, und den Schwellenwert in Abständen einer Einheitszeitdauer überprüft und diesen verkleinert, wenn die Häufigkeit des Betriebs der Antischleudermoment-Erzeugungseinrichtung während einer vorangegangenen Einheitszeitdauer zunimmt.
Die beschriebene Fahrdynamikregelung ist aufgrund der benötigten Sensorik relativ aufwändig. Ferner ist der Aufwand für die Anpassung von Reglerparametern, wie beispielsweise des Gierratenschwellenwerts und die Ermittlung des Fahrzeugmodells einzelner Fahrzeuge bzw. Fahrzeugtypen mit einem relativ hohen Aufwand verbunden.

**Zusammenfassung der Erfindung**

Es ist eine Aufgabe der vorliegenden Erfindung, eine einfachere Fahrdynamikregelung bereitzustellen, mit der ein Fahrzeug in kritischen Fahrsituationen, insbesondere in Übersteuersituationen, stabilisiert werden kann.
Die Aufgabe wird durch ein System mit den Merkmalen des Patentanspruchs 1 und durch ein Verfahren mit den Merkmalen des Patentanspruchs 8 gelöst.
Ausführungsformen des Systems und des Verfahrens sind in den abhängigen Ansprüchen angegeben.
Gemäß einem ersten Aspekt der Erfindung wird ein System zum Stabilisieren eines Kraftfahrzeugs vorgeschlagen. Das System umfasst

- wenigstens einen Geschwindigkeitssensor zum Erfassen einer Längsgeschwindigkeit und einer Quergeschwindigkeit des Kraftfahrzeugs;
- eine Berechnungseinheit, die dazu ausgebildet ist, aus der erfassten Längsgeschwindigkeit und der erfassten Quergeschwindigkeit einen Schwimmwinkel des Kraftfahrzeugs zu berechnen;
- eine mit der Berechnungseinheit gekoppelte Bewertungseinheit, die dazu ausgebildet ist, den Schwimmwinkel mit einem vorgegebenen Schwellenwert zu vergleichen, und eine Übersteuersituation festzustellen, wenn der Schwimmwinkel den Schwellenwert überschreitet;
- eine mit der Bewertungseinheit gekoppelte Ansteuereinheit und einen das Fahrverhalten des Kraftfahrzeugs beeinflussenden Aktuator, wobei die Ansteuereinheit dazu ausgebildet ist, den Aktuator in einer Übersteuersituation anzusteuern.

Gemäß einem zweiten Aspekt der Erfindung wird ein Verfahren vorgeschlagen, das folgende Schritte umfasst:

- Erfassen einer Längsgeschwindigkeit und einer Quergeschwindigkeit des Kraftfahrzeugs mittels wenigstens eines Geschwindigkeitssensors;
- Berechnen eines Schwimmwinkels des Kraftfahrzeugs aus der erfassten Längsgeschwindigkeit und der erfassten Quergeschwindigkeit;
- Beobachten des Schwimmwinkels und Feststellen einer Übersteuersituation, wenn der Schwimmwinkel einen Schwellenwert überschreitet;
- wenn eine Übersteuersituation festgestellt worden ist, Ansteuern eines Aktuators, um das Fahrverhalten des Kraftfahrzeugs zu beeinflussen.

Ein Vorteil der Erfindung besteht darin, dass der Schwimmwinkel des Kraftfahrzeugs anstelle der Gierrate als Regelgröße herangezogen wird. Damit wird kein Gierratensensor mehr benötigt. Stattdessen wird die Quergeschwindigkeit des Fahrzeugs erfasst, wozu ein einfacher gestalteter, preisgünstigerer Sensor verwendet werden kann. Zudem wurde festgestellt, dass eine Anpassung des Schwimmwinkelschwellenwerts mit weniger Aufwand durchgeführt werden kann, als die Anpassung der Parameter einer Gierratenregelung nebst Fahrzeugmodell.

Erfindungsgemäß ist ein optischer Geschwindigkeitssensor zum Erfassen der Fahrzeugquergeschwindigkeit und/oder der Fahrzeuglängsgeschwindigkeit vorgesehen, der dazu ausgebildet ist, Licht, das an einer Fahrbahnoberfläche reflektiert wird, auf der sich das Kraftfahrzeug im Betrieb bewegt, zu erfassen und auszuwerten, um die Fahrzeugquergeschwindigkeit und/oder die Fahrzeuglängsgeschwindigkeit zu bestimmen.

Der Vorteil eines optischen Sensors besteht insbesondere darin, dass keine mechanischen Komponenten benötigt werden, die in spezieller Weise gelagert und justiert werden müssen, um eine genaue Messung zu ermöglichen. Die Herstellung des Sensors ist damit grundsätzlich einfacher und kostengünstiger als bei einem mechanischen Sensor.

Der optische Geschwindigkeitssensor kann beispielsweise Bilder der Fahrbahnoberfläche erfassen und die Längs- und/oder Quergeschwindigkeit des Fahrzeugs aus einer Verschiebung von Strukturen innerhalb von nacheinander aufgenommenen Bildern ermitteln.

Gleichfalls kann es sich etwa um einen Sensor mit einer Lichtquelle handeln, die einen kohärenten Messlichtstrahl, insbesondere einen Laserstrahl, in Richtung der Fahrbahnoberfläche aussendet, welcher von der Fahrbahnoberfläche reflektiert wird, und mit dem Licht in der Lichtquelle interferiert. Die Interferenz kann mittels eines Interferenzdetektors detektiert werden, und anhand einer mittels des Interferenzdetektors erfassen Messgröße kann bei geeigneter Ausrichtung des Messlichtstrahls die Quergeschwindigkeit oder die Längsgeschwindigkeit des Fahrzeugs ermittelt werden. Die Verwendung von zwei Messlichtstrahlen erlaubt eine Erfassung der Fahrzeugquergeschwindigkeit und der Fahrzeuglängsgeschwindigkeit.

Insbesondere kann der Ort der Interferenz die Lichtquelle sein, deren Betriebszustand aufgrund der Interferenz verändert wird, was auch als Self-Mixing-Effekt bezeichnet wird. Die Veränderungen des Betriebszustands können mit dem Interferenzdetektor erfasst werden.

In einer weiteren Ausgestaltung des Systems und des Verfahrens umfasst der Geschwindigkeitssensor ein Positionsbestimmungssystem, und die Fahrzeugquergeschwindigkeit und/oder die Fahrzeuglängsgeschwindigkeit wird anhand einer Verfolgung einer Position des Kraftfahrzeugs mittels des Positionsbestimmungssystems ermittelt.

Ein derartiger Geschwindigkeitssensor hat ebenfalls den Vorteil, dass keine besondere Lagerung oder Justierung von mechanischen Bauteilen erforderlich ist, um genaue Messungen durchführen zu können.

Eine Weiterbildung des Systems und des Verfahrens beinhaltet, dass der Aktuator dazu ausgebildet ist, aufgrund der Ansteuerung durch die Ansteuereinheit in einer Übersteuersituation ein Vorderrad des Fahrzeugs mit einer Bremskraft zu beaufschlagen. Hierdurch kann eine wirksame Stabilisierung des Fahrzeugs in einer instabilen Fahrsituation erreicht werden.

Um den Einsatzbereich der Fahrdynamikregelung zu erweitern, ist erfindungsgemäß ein Lenkwinkelsensor zum Erfassen eines an lenkbaren Rädern des Fahrzeugs eingestellten Radeinschlagswinkel vorgesehen sowie eine Bewertungseinheit, die dazu ausgebildet ist, anhand des Radeinschlagswinkels und eines einfachen Fahrzeugmodells eine Untersteuersituation festzustellen. Somit können neben den Instabilitäten, die aufgrund eines Übersteuerns entstehen, auch Instabilitäten aufgrund eines Untersteuerns erkannt werden.

Eine verbundene Ausführungsform des Systems und des Verfahrens zeichnet sich dadurch aus, dass die Bewertungseinheit dazu ausgebildet ist, eine Untersteuersituation festzustellen, wenn der Radeinschlagwinkel größer ist als der theoretisch mögliche Radeinschlagwinkel (f(v)).

Um das Fahrzeug in Untersteuersituationen stabilisieren zu können, beinhaltet eine Weiterbildung des Systems und des Verfahrens, dass die Ansteuereinheit dazu ausgebildet ist, in einer Untersteuersituation derart auf einen Antriebsmotor des Kraftfahrzeugs einzuwirken, dass eine Geschwindigkeit und/oder eine Beschleunigung des Kraftfahrzeugs verringert wird.

Bei dem Fahrzeug kann es sich insbesondere um ein vierrädriges Kraftfahrzeug handeln. In Übersteuersituationen wird ein solches Fahrzeug zweckmäßigerweise dadurch stabilisiert, dass ein Vorderrad - vorzugsweise das kurvenäußere Vorderrad - abgebremst wird. In einer Untersteuersituation kann ein derartiges Fahrzeug stabilisiert werden, indem ein Hinterrad - insbesondere das kurveninnere Hinterrad - abgebremst wird. Daher sieht eine Ausgestaltung des Systems und des Verfahrens vor, dass der Aktuator dazu ausgebildet ist, aufgrund einer Ansteuerung durch die Ansteuereinheit in einer Untersteuersituation ein Hinterrad des Kraftfahrzeugs mit einer Bremskraft zu beaufschlagen.

Wie zuvor erwähnt, kann das Fahrzeug in einer Untersteuersituation auch durch eine Reduzierung des von dem Antriebsmotor bereitgestellten Antriebsmoments stabilisiert werden. Daher sind Bremseneingriffe an den Hinterrädern selbst dann nicht zwingend erforderlich, wenn die Fahrdynamikregelung sich auf Untersteuersituationen erstreckt. Sofern die Fahrdynamikregelung auf Übersteuersituationen beschränkt bleibt, sind Bremseneingriffe an den Hinterrädern gleichfalls nicht erforderlich.

Daher beinhaltet eine Weiterbildung des Systems und des Verfahrens, dass der Aktuator derart ausgestaltet ist, dass er ausschließlich die Vorderräder des Kraftfahrzeugs mit einer Bremskraft beaufschlagen kann.

Vorteilhaft kann der Aktuator hierdurch einfacher und kostengünstiger ausgestaltet werden, als ein Aktuator, mit dem eine Bremskraft auch an den Hinterrädern aufgebaut werden kann.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

## Kurze Beschreibung der Figuren

Von den Figuren zeigt:

Fig. 1 eine schematische Darstellung eines Kraftahrzeugs, das ein System zur Durchführung einer Fahrdynamikregelung umfasst,

Fig. 2 eine schematische Darstellung einer Untergruppe einer Hydraulikeinheit des Kraftfahrzeugs,

Fig. 3 eine schematische Darstellung einer Lasereinheit zur Erfassung der Fahrzeuglängs- und/oder Quergeschwindigkeit,

Fig. 4 eine schematische Darstellung eines Blockdiagramms der Steuereinheit des Fahrdynamikregelsystems in einer ersten Ausgestaltung, und

Fig. 5 eine schematische Darstellung eines Blockdiagramms der Steuereinheit des Fahrdynamikregelsystems in einer zweiten Ausgestaltung.

## Ausführliche Darstellung von Ausführungsbeispielen

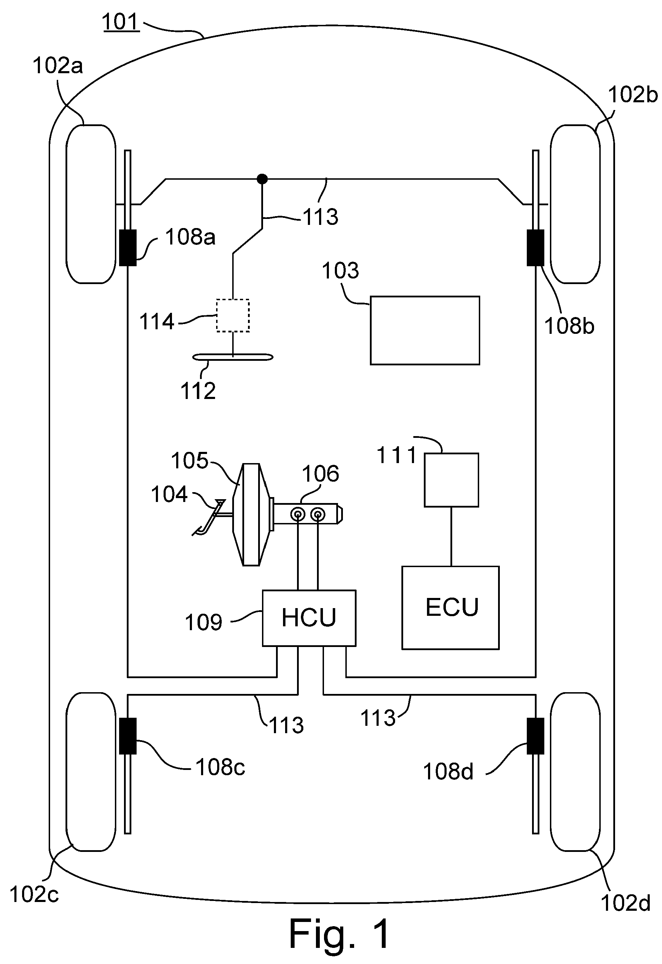

In Figur 1 ist in schematischer Darstellung ein vierrädriges Kraftfahrzeug 101 mit zwei Vorderrädern 102a, 102b und zwei Hinterrädern 102c, 102d dargestellt.

Die Vorderräder 102a, 102b sind lenkbar, und der Radeinschlagswinkel kann von dem Fahrer mittels einer Lenkhandnabe 112 eingestellt werden, die über einen Lenkstrang 113 mit den Vorderrädern 102a, 102b verbunden ist.

Das Fahrzeug 101 wird durch einen Antriebsmotor 103 angetrieben, bei dem es sich beispielsweise um einen Verbrennungsmotor, einen Elektromotor oder einen Hybridmotor handeln kann. Der Antriebsmotor 103 erzeugt ein Motordrehmoment, das über einen in der Figur 1 nicht dargestellten Antriebsstrang an zwei oder vier Fahrzeugräder 102a, 102b, 102c, 102d übertragen wird, um diese Räder 102a, 102b, 102c, 102d anzutreiben.

Um das Fahrzeug 101 abzubremsen, ist eine Bremsanlage vorgesehen, die in der Darstellung als eine hydraulische Bremsanlage ausgestaltet ist. Die Bremsanlage umfasst eine Betätigungseinrichtung 104, die über einen Bremskraftverstärker 105 mit einem Hauptbremszylinder 106 verbunden und vorzugsweise als Bremspedal ausgebildet ist. Der Hauptbremszylinder 106 ist strömungsmäßig mit einem Vorratsbehälter 107 für Hydraulikflüssigkeit verbunden und vorzugsweise als so genannter Tandemhauptzylinder ausgeführt, bei dem jeweils eine von zwei gekoppelten Druckkammern zur Druckversorgung eines Bremskreises vorgesehen ist, der zwei der vier Radbremsen 108a, 108b, 108c, 108d umfasst. Die Radbremsen 108a, 108b, 108c, 108d sind jeweils einem Rad 102a, 102b, 102c, 102d zugeordnet. Die Bremskreise weisen beispielsweise eine X-Aufteilung auf, bei der eine Druckkammer des Hauptzylinders 106 die vordere rechte Radbremse 108b und die hintere linke Radbremse 108c versorgt und die andere Druckkammer die vordere linke Radbremse 108a und die hintere rechte Radbremse 108b.

Mittels der Betätigungseinrichtung 104 kann über den Bremskraftverstärker 105 in einer in dem Hauptbremszylinder 106 befindlichen Hydraulikflüssigkeit ein Bremsdruck aufgebaut werden, der über Druckleitungen an die Radbremsen 108a, 108b, 108c, 108d übertragen werden kann. Aufgrund der Druckbeaufschlag und einer Radbremse 108a, 108b, 108c, 108d wird das zugehörige Rad 102a, 102b, 102c, 102d mit einem Bremsmoment beaufschlagt und dadurch abgebremst.

Mit den Radbremsen 108a, 108b, 108c, 108d ist der Hauptbremszylinder 106 über eine Hydraulikeinheit 109 verbunden. Die Hydraulikeinheit 109 dient als Aktuator zur Beeinflussung des Fahrverhaltens des Fahrzeugs 101 und wird durch eine Steuereinheit (ECU) angesteuert. Mithilfe der Steuereinheit wird eine Fahrdynamikregelung und vorzugsweise auch eine Bremsschlupfregelung (ABS: Antiblockiersystem) ausgeführt. Die vorgesehene Fahrdynamikregelung wird im Folgenden näher erläutert. Die Bremsschlupfregelung ist in einer dem Fachmann an sich bekannten Art ausgeführt und wird daher nicht näher beschrieben.

Vorzugsweise handelt es sich bei der Steuereinheit (ECU) um ein Steuergerät mit einem Mikroprozessor zur Ausführung von Programmen, deren Programmcode in der Steuereinheit gespeichert werden kann. Die Fahrdynamikregelung und die Bremsschlupfregelung umfassen in dieser Ausgestaltung des Steuergeräts eine Software, die auf dem Mikroprozessor des Steuergeräts ausgeführt wird. Die vorgesehenen Algorithmen werden dabei schleifenweise abgearbeitet, wobei eine Schleife in jedem Taktschritt (Loop) einmal durchlaufen wird, um gegebenenfalls ein Ausgangssignal zu erzeugen.

In einer Ausgestaltung unterteilt sich die Hydraulikeinheit 109 in zwei Untergruppen, die in gleicher Weise aufgebaut sind und jeweils zwei Radbremsen 108a, 108b, 108c, 108d zugeordnet sind. Beispielsweise kann es sich bei den Radbremsen 108a, 108b, 108c, 108d, die einer Untergruppe zugeordnet sind, um die Radbremsen 108a, 108b, 108c, 108d eines Bremskreises handeln.

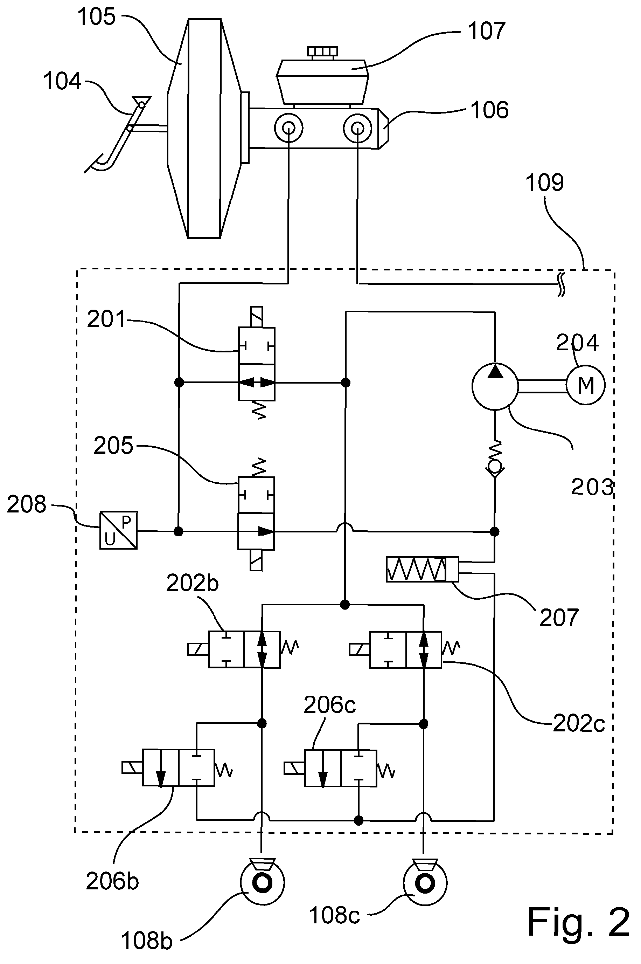

In Figur 2 ist die Hydraulikeinheit mit einer der Untergruppen, welche beispielhaft der vorderen rechten Radbremse 108b und der hinteren linken Radbremse 108c zugeordnet ist, in einem schematischen Schaltbild dargestellt. Die Radbremsen 108b, 108c sind innerhalb der Untergruppe über ein stromlos offenes Trennventil 201 mit dem Hauptbremszylinder 106 verbunden. Zusätzlich ist den Radbremsen 108b, 108c jeweils ein Einlassventil 202b, 202c zugeordnet, das ebenfalls stromlos geöffnet ist. Bei einem ausschließlich durch den Fahrer gesteuerten Bremsvorgang wird ein in dem Hauptbremszylinder 106 aufgebauter Bremsdruck, der auch als Vordruck bezeichnet wird, direkt zu den Radbremsen 108b, 108c übertragen.

Die Hydraulikeinheit 109 umfasst weiterhin eine Hydraulikpumpe 203, die durch einen Motor 204 angetrieben wird, der auch zum Antreiben der Hydraulikpumpe der nicht dargestellten Untergruppe der Hydraulikeinheit 109 vorgesehen sein kann. Mittels der Hydraulikpumpe 203 können die Radbremsen 108b, 108c fahrerunabhängig mit einem Bremsdruck beaufschlagt werden. Zum Druckaufbau wird das Trennventil 201 geschlossen und das stromlos geschlossene Umschaltventil 205 geöffnet, so dass zwischen dem Hauptbremszylinder 106 und der Saugseite der Hydraulikpumpe 203 eine Verbindung entsteht, und der Hauptbremszylinder 106 von der Druckseite der Hydraulikpumpe 203 entkoppelt wird. Die Hydraulikpumpe 203 ist damit in der Lage, Hydraulikflüssigkeit aus dem Hauptbremszylinder 106 bzw. dem Vorratsbehälter 107 in die Radbremsen 108b, 108c zu fördern und damit den Bremsdruck in den Radbremsen 108b, 108c zu erhöhen. Dies dient bei der vorgesehenen Fahrdynamikregelung dazu, jeweils ein Rad 102a, 102b, 102c, 102d mit einer Bremskraft zu beaufschlagen, um das Fahrzeug zu stabilisieren.

Um den Bremsdruck in den Radbremsen 108b, 108c gegen einen bestehenden Vordruck verringern zu können, ist jeder Radbremse 108b, 108c ein stromlos geschlossenes Auslassventil 206b, 206c zugeordnet. Wird das Auslassventil 206b, 206c geöffnet, kann Hydraulikflüssigkeit aus der entsprechenden Radbremse 108a, 108b in einen Niederdruckspeicher 207 entweichen. Mittels der Hydraulikpumpe 203 kann die Hydraulikflüssigkeit aus dem Niederdruckspeicher 207 in den Hauptbremszylinder 106 zurückgefördert werden, wozu das Umschaltventil 205 sowie die Einlassventile 202b, 202c geschlossen werden und das Trennventil 201 geöffnet wird. Eine Verringerung des Bremsdrucks in einer Radbremse 108a, 108b, 108c, 108d erfolgt insbesondere im Rahmen der gegebenenfalls vorgesehenen Bremsschlupfregelung, wenn das zugehörige Rad 102a, 102b, 102c, 102d während eines Bremsvorgangs blockiert oder zu blockieren droht.

Darüber hinaus kann ein in den Radbremsen 108b, 108c vorhandener Bremsdruck konstant gehalten werden, indem sowohl das der Radbremse 108b, 108c zugeordnete Einlassventil 202b, 202c als auch das zugehörige Auslassventil 206b, 206c geschlossen werden. Die Aufrechterhaltung des Bremsdrucks in einer Radbremse 108a, 108b, 108c, 108d wird bei der vorgesehenen Fahrdynamikregelung und bei der gegebenenfalls vorgesehenen Bremsschlupfregelung eingesetzt, um einen Bremsdruck über eine bestimmte Zeit - d.h. über einen oder mehrere Taktschritte der Steuereinheit - aufrecht zu erhalten.

Der von dem Fahrer eingestellte Vordruck wird mittels eines Drucksensors 208 erfasst, der vorzugsweise nur in einer der beiden Untergruppen der Hydraulikeinheit 109 enthalten ist.

In der zuvor dargestellten Ausgestaltung ermöglicht es die Hydraulikeinheit 109, den Bremsdruck in allen Radbremsen 108a, 108b, 108c, 108d mittels der Hydraulikpumpe 203 gegenüber der Fahrervorgabe zu erhöhen und zu verringern. Eine derartige Hydraulikeinheit 109 ist dem Fachmann an sich aus herkömmlichen Fahrdynamikregelsystemen bekannt.

In einer weiteren Ausgestaltung ist die Hydraulikeinheit 109 derart vereinfacht, dass der Bremsdruck in allen Radbremsen 108a, 108b, 108c, 108d gegenüber der Fahrervorgabe zwar verringert werden kann, dass eine Erhöhung des Bremsdrucks gegenüber der Fahrervorgabe jedoch lediglich in den Radbremsen 108a, 108b der Vorderräder 102a, 102b möglich ist.

Hierzu umfasst die Hydraulikeinheit 109 eine den vorderen Radbremsen 108a, 108b zugeordnete Untergruppe, die in der zuvor beschriebenen Weise ausgestaltet ist. Diese Untergruppe dient dazu, die Vorderräder 102a, 102b im Rahmen der vorgesehenen Fahrdynamikregelung mit Bremskraft zu beaufschlagen. Ferner wird die Untergruppe bei der gegebenenfalls vorgesehenen Bremsschlupfregelung zur Reduzierung der Bremskraft an den Vorderrädern 102a, 102b eingesetzt.

In den Radbremsen 108c, 108d der Hinterräder 102c, 102d kann der Bremsdruck lediglich gegenüber der Fahrervorgabe mittels einer weiteren Untergruppe der Hydraulikeinheit 109 verringert werden, um eine Bremsschlupfregelung zu ermöglichen. Diese Untergruppe unterscheidet sich von der zuvor beschriebenen Untergruppe dadurch, dass kein Trennventil 201 und kein Umschaltventil 205 vorgesehen ist. Insbesondere ist das Trennventil 201 aus der Druckleitung entfernt und der das Umschaltventil enthaltene Zweig der Hydraulik entfällt. Hierdurch kann die Hydraulikeinheit 109 gegenüber der herkömmlichen Hydraulikeinheit einer Fahrdynamikregelung vereinfacht werden.

Falls keine Bremsschlupfregelung vorgesehen ist, kann auf die zweite Untereinheit der Hydraulikeinheit 109 auch verzichtet und eine direkte Verbindung zwischen dem Hauptbremszylinder 106 und den Radbremsen 108c, 108d der Hinterräder 102c, 102d vorgesehen werden.

Eingangsgrößen für die vorgesehene Fahrdynamikregelung sind in einer Ausgestaltung lediglich die Längsgeschwindigkeit und die Quergeschwindigkeit des Fahrzeugs. Insbesondere werden hierunter die Längs- und Quergeschwindigkeit des Fahrzeugschwerpunkts verstanden.

Die Quergeschwindigkeit wird mithilfe eines Geschwindigkeitssensors 111 erfasst. Der Geschwindigkeitssensor 111 kann auch dazu verwendet werden, die Fahrzeuglängsgeschwindigkeit zu erfassen. Alternativ kann die Fahrzeuglängsgeschwindigkeit in einer dem Fachmann an sich bekannten Weise aus den Signalen von Raddrehzahlsensoren ermittelt werden, die an den Rädern 102a, 102b, 102c, 102d des Fahrzeugs 101 angeordnet sind.

Der Geschwindigkeitssensor 111 kann grundsätzlich in beliebiger Art ausgestaltet sein.

In einer beispielhaften Ausgestaltung handelt es sich um den optischen Geschwindigkeitssensor zur Erfassung der Längs- und/oder Quergeschwindigkeit des Fahrzeugs 101, der in der DE 10 2004 060 677 A1 beschrieben ist. Der Sensor umfasst eine Kamera, die am Unterboden des Fahrzeugs 101 montiert ist und Bilder der Fahrbahnoberfläche, auf der sich das Fahrzeug 101 bewegt, erfasst. Der Sensor ermittelt Verschiebungen in Strukturen innerhalb nacheinander aufgenommener Bilder der Fahrbahnoberfläche und bestimmt aus den Verschiebungen die Längs- und/oder Quergeschwindigkeit des Fahrzeugs 101. Der Sensor kann damit dazu verwendet werden, nur die Quergeschwindigkeit oder zusätzlich auch die Längsgeschwindigkeit zu erfassen.

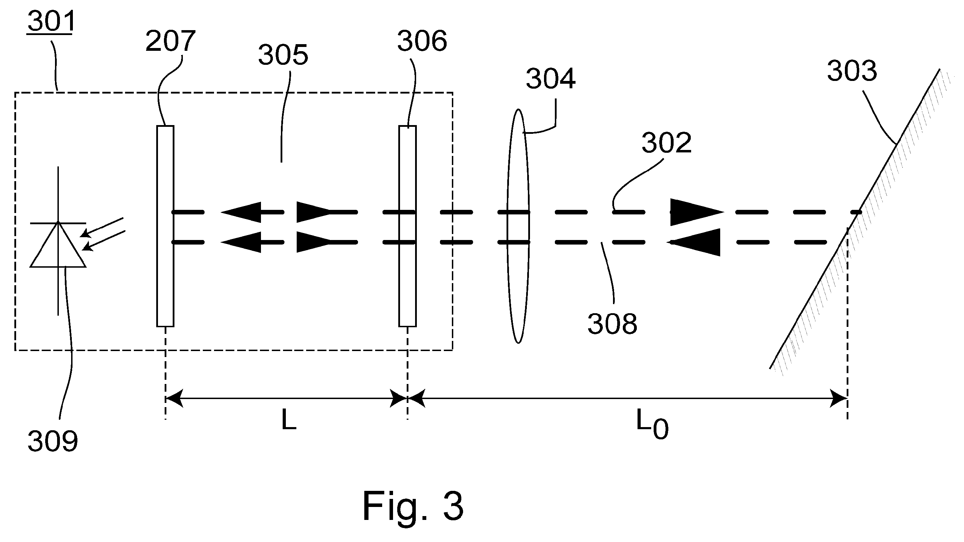

In einer weiteren Ausgestaltung umfasst der Geschwindigkeitssensor 111 eine oder zwei Lasereinheiten, von denen in Figur 3 eine Lasereinheit 301 dargestellt ist. Jede Lasereinheit 301 ist am Unterboden des Fahrzeugs 101 montiert und sendet einen Messlichtstrahl 302 unter einem Winkel zum Unterboden des Fahrzeugs 101 in Richtung der Fahrbahnoberfläche 303 aus. Durch ein optisches Element 304 - vorzugsweise eine Anordnung optischer Linsen - wird der Messlichtstrahl 302 gebündelt und auf einen Punkt der Fahrbahn 303 oder auf einen Punkt in der Nähe der Fahrbahnoberfläche 303 fokussiert. Der Messlichtstrahl 302 einer Lasereinheit 301 wird durch kohärentes Licht gebildet und beispielsweise in einem Halbleiterlaser erzeugt, der in einer Ausgestaltung als Vertical Cavity Surface Emitting Laser (VCSEL) ausgestaltet sein kann. Das Licht liegt vorzugsweise in einem unsichtbaren, insbesondere im infraroten Spektralbereich, so dass der Messlichtstrahl 302 nicht sichtbar ist und Verkehrsteilnehmer nicht irritiert werden. Alternativ kann jedoch auch Licht in einem anderen Spektralbereich verwendet werden.

Jede Lasereinheit 301 umfasst einen Resonator 305 der Länge $L$, welcher durch einen vorderen teildurchlässigen Spiegel 306 und einen hinteren teildurchlässigen Spiegel 307 begrenzt wird. Der Messlichtstrahl 302 wird durch Licht gebildet, das durch den vorderen Spiegel 306 aus dem Resonator 305 in Richtung der Fahrbahnoberfläche 303 austritt. Die Länge der Strecke, die der Messlichtstrahl 302 zwischen dem Resonator 305 bzw. dem vorderen Spiegel 306 und der Fahrbahnoberfläche 303 zurücklegt, wird hier mit $L_0$ bezeichnet. An der Fahrbahnoberfläche 303 wird der Messlichtstrahl 302 gestreut. Ein Teil des gestreuten Lichts wird als Streulichtstrahl 308 in entgegengesetzte Richtungen zu dem Messlichtstrahl 302 reflektiert. Durch die optische Einrichtung 304 gelangt der Streulichtstrahl 308 in den Resonator 305 und interferiert dort mit dem im Resonator 305 verstärkten Licht.

Bewegen sich der Resonator 305 und die Fahrbahnoberfläche 303 aufgrund einer Bewegung des Fahrzeugs 101 relativ zueinander mit einer Geschwindigkeitskomponente $v_L$ in Richtung des Messlichtstrahls 103, dann erfährt der Streulichtstrahl 308 eine Doppler-Verschiebung. Hierbei handelt es sich um eine Veränderung der Frequenz des Lichts beziehungsweise der Wellenlänge in Abhängigkeit von der genannten Geschwindigkeitskomponente $v_L$. Aufgrund der Rückkopplung des Streulichtstrahls 308 in den Resonator 305 tritt innerhalb des Resonators 305 ein so genannter Self-Mixing-Effekt auf. Das heißt, es kommt zu einer Modulation der Laserverstärkung, deren Frequenz von der Doppler-Verschiebung des Streulichtstrahls 308 abhängt und damit auch von der beschriebenen Geschwindigkeitskomponente.

Die zeitliche Veränderung $\Delta g$ der Laserverstärkung in Abhängigkeit von der Geschwindigkeitskomponente $v_L$ der Relativbewegung zwischen dem Resonator 305 und der Fahrbahnoberfläche 303 in Richtung des Messlichtstrahls 302 wird durch die folgende Gleichung beschrieben:

$$\Delta g = -\frac{\kappa}{L} \cdot \cos\left(4 \cdot \pi \cdot f_0 \cdot v_L \cdot t / c + 4 \cdot \pi \cdot L_0 \cdot f_0 / c\right) \qquad (1)$$

Hierin bezeichnet $\kappa$ einen laserspezifischen Kopplungskoeffizienten, der einen Wert zwischen Null und Eins besitzt, $f_o$ die Frequenz des von der Lasereinheit 108i emittierten Lichts, c die Lichtgeschwindigkeit und $t$ die Zeit. Gleichung (1) ergibt sich beispielsweise aus der Theorie des Self-Mixing-Effekts in M.H. Koelink et al., "Laser Doppler velocimeter based on the self-mixing effect in a fibre-coupled semiconductor laser: theory", Applied Optics, Vol. 31, 1992, Seiten 3401-3408.

Die periodische Modulation der Laserverstärkung führt zu einer entsprechenden periodischen Modulation der Intensität des von dem Resonator 305 emittierten Lichts. Aus der Frequenz, mit der sich die gemessene Intensität periodisch verändert, kann die Geschwindigkeitskomponente $v_L$ ermittelt werden. Zur Messung der Intensität des von dem Resonator 305 emittierten Lichts ist die Fotodiode 309 vorgesehen, die Licht erfasst, das durch den hinteren Spiegel 307 aus dem Resonator 305 austritt. Üblicherweise wird eine solche Diode 309 zur Konstanthaltung bzw. Regelung der Intensität des Laserlichts verwendet und ist daher in der Regel bereits Bestandteil der Ausstattung von kommerziell erhältlichen Laserdioden. In der vorliegenden Anwendung wird die Fotodiode 309 herangezogen, um aus dem zeitlichen Verlauf der gemessenen Intensität die Frequenz der Intensitätsänderungen ermittelt und anhand dieser Frequenz die Geschwindigkeitskomponente $v_L$ bestimmt.

Mittels einer geeignet ausgerichteten Lasereinheit 301 kann die Quergeschwindigkeit des Fahrzeugs 101 erfasst werden. Die Lasereinheit 301 kann beispielsweise lotrecht unterhalb des Fahrzeugschwerpunkts am Fahrzeugunterboden montiert werden, und der Messlichtstrahl 302 kann entlang der Fahrzeugquerrichtung ausgerichtet werden. Anhand des Winkels, unter dem der Messlichtstrahl 302 auf die Fahrbahnoberfläche 303 gerichtet ist, kann aus der mittels der Lasereinheit 301 gemessenen Geschwindigkeitskomponente $v_L$ die Quergeschwindigkeit des Fahrzeugs 101 bestimmt werden. Der Winkel ergibt sich aus der Einbaulage der Lasereinheit 301 und kann als Parameter im Fahrzeug gespeichert werden. Die Beeinflussung der Geschwindigkeitsmessung durch Veränderungen der Geometrie aufgrund von Wank- und Nickbewegungen des Fahrzeugs 101 können in der Regel vernachlässigt werden.

Eine weitere Lasereinheit 301, die vorzugsweise ebenfalls lotrecht unterhalb des Fahrzeugschwerpunkts angebracht ist und deren Messlichtstrahl 302 entlang der Fahrzeuglängsrichtung ausgerichtet ist, kann dazu verwendet werden, die Fahrzeuglängsgeschwindigkeit zu erfassen.

In einer weiteren Ausführungsform kann der Geschwindigkeitssensor 111 ein Positionsbestimmungssystem umfassen. Vorzugsweise handelt es sich dabei um ein satellitengestütztes System, das beispielsweise auf dem Global Positioning System (GPS) oder dem System GALILEO basiert. Quer- und/oder Längsgeschwindigkeit des Fahrzeugs 101 können dabei durch eine Verfolgung der Position des Fahrzeugs 101 mittels des Positionsbestimmungssystems ermittelt werden.

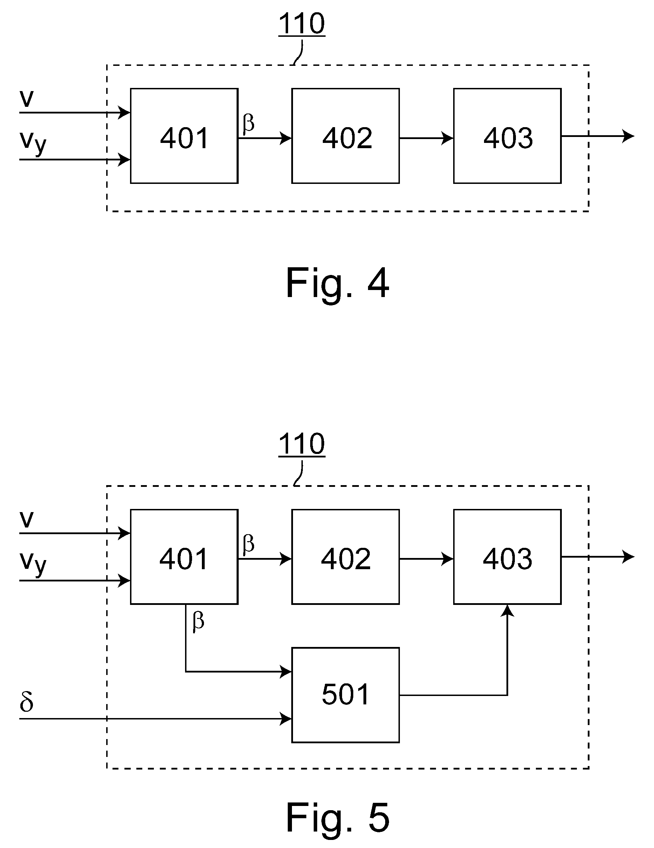

Die in der Steuereinheit enthaltenen Komponenten des vorgesehenen Fahrdynamikregelsystems sind in Figur 4 in einem schematischen Blockschaltbild veranschaulicht.

Die Eingangssignale, d.h. die erfasste Längsgeschwindigkeit $v$ und Quergeschwindigkeit $v_y$, werden der Berechnungseinheit 401 zugeführt. Diese bestimmt aus den Eingangssignalen den Schwimmwinkel $\beta$ des Fahrzeugs 101. Hierbei handelt es sich um den Winkel zwischen der Fahrzeuglängsachse und der Bewegungsrichtung des Fahrzeugs 101. In der Berechnungseinrichtung 401 wird der Schwimmwinkel $\beta$ vorzugsweise gemäß der Beziehung

$$\beta = \arctan\frac{v_y}{v} \qquad\qquad (2)$$

bestimmt. Der berechnete Wert wird dann der Bewertungseinheit 402 übergeben. Vorzugsweise wird in jedem Taktschritt der Steuereinheit ein Wert für den Schwimmwinkel $\beta$ berechnet.

In der Bewertungseinrichtung 402 wird das Vorzeichen des Schwimmwinkels $\beta$ ermittelt, welches die Richtung einer von dem Fahrzeug 101 durchfahrenen Kurve angibt. Ferner wird der Betrag des Schwimmwinkels $\beta$ mit einem Schwellenwert verglichen. Der Schwellenwert charakterisiert die Grenze zwischen stabilen und instabilen Fahrzuständen. Er wird beispielsweise anhand von Fahrversuchen für einen bestimmten Fahrzeugtyp ermittelt und ist als Parameter in der Steuereinheit gespeichert. Ein stabiler Fahrzustand wird festgestellt, wenn der Betrag des Schwimmwinkels $\beta$ kleiner als der Schwellenwert ist. In diesem Fall wird kein Eingriff in das Fahrverhalten des Fahrzeugs 101 vorgenommen. Ein instabiler Fahrzustand - insbesondere ein übersteuernder Fahrzustand - wird festgestellt, wenn der Betrag des Schwimmwinkels $\beta$ größer als der Schwellenwert ist. In diesem Fall wird die Differenz zwischen dem Schwimmwinkel $\beta$ und dem Schwellenwert sowie das Vorzeichen des Schwimmwinkels an die Ansteuereinheit 403 übergeben.

Die Ansteuereinheit 403 ermittelt im Fall eines übersteuernden Fahrverhaltens des Fahrzeugs eine Stellanforderung, welche an die Hydraulikeinheit 203 übermittelt und von der Hydraulikeinheit 203 umgesetzt wird. Gemäß der Stellanforderung wird das kurvenäußere Vorderrad 102a, 102 des Fahrzeugs 101 abgebremst, um das Fahrzeug 101 zu stabilisieren. Vorzugsweise wird die Stellanforderung nach Maßgabe der Differenz zwischen dem Schwimmwinkel und dem Schwellenwert ermittelt, vorzugsweise als PID Regler ausgeführt. Das kurvenäußere Rad wird anhand der Kurvenrichtung bestimmt, die aus dem Vorzeichen des Schwimmwinkels ermittelt werden kann.

Eine weitere Ausgestaltung des Fahrdynamikregelsystems unterscheidet sich von der vorher beschriebenen Ausführungsform dadurch, dass eine weitere Bewertungseinheit 501 vorgesehen ist, die dazu ausgestaltet ist, instabile Fahrsituationen zu erkennen, die auf ein Untersteuern des Fahrzeugs 101 zurückzuführen sind. Die in dieser Ausgestaltung in der Steuereinheit enthaltenen Komponenten des Fahrdynamikregelsystems sind in Figur 5 in einem schematischen Blockdiagramm dargestellt.

Ein Eingangssignal neben der Fahrzeuglängsgeschwindigkeit $v$ und der Fahrzeugquergeschwindigkeit $v_y$ ist der Radeinschlagswinkel $\delta$ der Vorderräder 102a, 102b des Fahrzeugs 101. Dieser kann beispielsweise in einer dem Fachmann an sich bekannten Weise mittels eines Lenkwinkelsensors 114 erfasst werden. Der Lenkwinkelsensor 114 kann innerhalb eines Lenkstrangs angeordnet sein, welcher die Vorderräder 102a, 102b mit der von dem Fahrer bedienten Lenkhandhabe verbindet.

Der Radeinschlagswinkel $\delta$ sowie der in der Berechnungseinrichtung aus der Längsgeschwindigkeit $v$ und der Quergeschwindigkeit $v_y$ ermittelte Schwimmwinkel $\beta$ werden der Berechnungseinheit 501 zugeführt. Diese ermittelt anhand der Längsgeschwindigkeit $v$ einen maximal möglichen theoretischen Radeinschlagswinkels $\delta_{theor.}$. Liegt der des Radeinschlagswinkels $\delta$ über dem theoretischen Radeinschlagswinkels $\delta$ theor. und liegt der ermittelte Schwimmwinkel $\beta$ unterhalb eines Schwellwertes, dann wird eine instabile Untersteuersituation festgestellt.

Im Falle, in dem eine Instabilität des Fahrzeugs 101 aufgrund eines Untersteuerns in der Bewertungseinheit 501 festgestellt worden ist, erzeugt die Ansteuereinheit 403 Stellanforderungen zur Beeinflussung des Fahrverhaltens. Gegenüber der zuvor anhand von Figur 4 beschriebenen Ausgestaltung der Steuereinheit ist die Ansteuereinheit in der vorliegenden Ausführungsform derart modifiziert, dass sie derartige Stellanforderungen erzeugen kann.

In einer Ausgestaltung beeinflusst die Ansteuereinheit 403 den Antriebsmotor 103 bzw. ein Motorsteuergerät in einer Untersteuersituation derart, dass das von dem Motor bereitgestellte Antriebsmoment reduziert wird, um das Fahrzeug 101 zu stabilisieren. Somit kann auch dann eine Stabilisierung des Fahrzeugs 101 in Untersteuersituationen vorgenommen werden, wenn das Fahrzeugs 101 lediglich über eine vereinfachte Hydraulikeinheit 109 verfügt, die einen Bremsdruckaufbau nur in den Radbremsen 108a, 108b der Vorderräder 102a, 102b ermöglicht.

Falls die Hydraulikeinheit 109 einen Bremsdruckaufbau in den Radbremsen 108c, 108d der Hinterräder 102c, 102d erlaubt, kann alternativ oder zusätzlich zu dem Eingriff in die Motorsteuerung das kurveninnere Hinterrad 102c, 102d mit einer Bremskraft beaufschlagt werden. Hierzu wird in der Ansteuereinheit 403 eine entsprechende Stellanforderung erzeugt, welche an die Hydraulikeinheit 109 übermittelt wird. Das kurveninnere Hinterrad 108c, 108d wird anhand der Richtung der durchfahrenen Kurve bestimmt, die aus dem Vorzeichen des erfassten Radeinschlagswinkels $\delta$ ermittelt werden kann.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der voran gegangenen Offenbarung, den Figuren und den Patentansprüchen.

**Patentansprüche**

1. System zum Stabilisieren eines Kraftfahrzeugs (101), umfassend

   - wenigstens einen Geschwindigkeitssensor (111) zum Erfassen einer Längsgeschwindigkeit und einer Quergeschwindigkeit des Kraftfahrzeugs (101);
   - eine Berechnungseinheit (401), die dazu ausgebildet ist, aus der erfassten Längsgeschwindigkeit und der erfassten Quergeschwindigkeit einen Schwimmwinkel des Kraftfahrzeugs (101) zu berechnen;
   - eine mit der Berechnungseinheit (401) gekoppelte Bewertungseinheit (402), die dazu ausgebildet ist, den Schwimmwinkel mit einem vorgegebenen Schwellenwert zu vergleichen, und eine Übersteuersituation festzustellen, wenn der Schwimmwinkel den Schwellenwert überschreitet;
   - eine mit der Bewertungseinheit (402) gekoppelte Ansteuereinheit (403) und einen das Fahrverhalten des Kraftfahrzeugs (101) beeinflussenden Aktuator (109), wobei die Ansteuereinheit (403) dazu ausgebildet ist, den Aktuator (109) in einer Übersteuersituation nach Maßgabe des Schwimmwinkels anzusteuern, **dadurch gekennzeichnet,**

   **dass** ein optischer Geschwindigkeitssensor (111) zum Erfassen der Fahrzeugquergeschwindigkeit und/oder der Fahrzeuglängsgeschwindigkeit vorgesehen ist, der dazu ausgebildet ist, Licht, das an einer Fahrbahnoberfläche (303) reflektiert wird, auf der sich das Kraftfahrzeug (101) im Betrieb bewegt, zu erfassen und auszuwerten, um die Fahrzeugquergeschwindigkeit und/oder die Fahrzeuglängsgeschwindigkeit zu bestimmen, wobei das System weiterhin einen Lenkwinkelsensor (114) zum Erfassen eines an lenkbaren Rädern (102a, 102b) des Kraftfahrzeugs (101) eingestellten Radeinschlagswinkels und eine weitere Bewertungseinheit (501) umfasst, die dazu ausgebildet ist, anhand des Schwimmwinkels, des Radeinschlagswinkels und eines Fahrzeugmodells eine Untersteuersituation festzustellen, wobei die Ansteuereinheit (403) mit der Bewertungseinheit (501) gekoppelt ist und dazu ausgebildet ist, in einer Untersteuersituation Stellanforderungen zur Beeinflussung des Fahrverhaltens zu erzeugen.

2. System nach Anspruch 1, wobei der Geschwindigkeitssensor (111) ein Positionsbestimmungssystem umfasst und wobei die Fahrzeugquergeschwindigkeit und/oder die Fahrzeuglängsgeschwindigkeit anhand einer Verfolgung einer Position des Kraftfahrzeugs (101) mittels des Positionsbestimmungssystems ermittelt wird.

3. System nach einem der vorangegangenen Ansprüche, wobei der Aktuator (109) dazu ausgebildet ist, aufgrund der Ansteuerung durch die Ansteuereinheit (403) in einer Übersteuersituation ein Vorderrad (102a; 102b) des Kraftfahrzeugs (101) mit einer Bremskraft zu beaufschlagen.

4. System nach einem der vorangegangenen Ansprüche, wobei die weitere Bewertungseinheit (501) dazu ausgebildet ist, eine Untersteuersituation festzustellen, wenn der erfasste Radeinschlagwinkel über dem anhand der Längsgeschwindigkeit ermittelten maximal möglichen Radeinschlagwinkel liegt.

5. System nach einem der vorangegangenen Ansprüche, wobei die Ansteuereinheit (403) dazu ausgebildet ist, in einer Untersteuersituation derart auf einen Antriebsmotor (103) des Kraftfahrzeugs (101) einzuwirken, dass eine Geschwindigkeit und/oder eine Beschleunigung des Kraftfahrzeugs (101) verringert wird.

6. System nach einem der vorangegangenen Ansprüche, wobei der Aktuator (109) dazu ausgebildet ist, aufgrund einer Ansteuerung durch die Ansteuereinheit (403) in einer Untersteuersituation ein Hinterrad (102c; 102d) des Kraftfahrzeugs (101) mit einer Bremskraft zu beaufschlagen.

7. System nach einem der Ansprüche 1 bis 6, wobei der Aktuator (109) derart ausgestaltet ist, dass er ausschließlich die Vorderräder (102a, 102b) des Kraftfahrzeugs (101) mit einer Bremskraft beaufschlagen kann.

8. Verfahren zum Stabilisieren eines Kraftfahrzeugs (101), umfassend die folgenden Schritte:

   - Erfassen einer Längsgeschwindigkeit und einer Quergeschwindigkeit des Kraftfahrzeugs (101) mittels wenigstens eines Geschwindigkeitssensors (111);
   - Berechnen eines Schwimmwinkels des Kraftfahrzeugs (101) aus der erfassten Fahrzeuglängsgeschwindigkeit und der erfassten Fahrzeugquergeschwindigkeit;
   - Vergleichen des Schwimmwinkels mit einem vorgegebenen Schwellenwert und Feststellen einer Übersteuersituation, wenn der Schwimmwinkel den Schwellenwert überschreitet,
   - wenn eine Übersteuersituation festgestellt worden ist, Ansteuern eines Aktuators, um das Fahrverhalten des Kraftfahrzeugs (101) zu beeinflussen, wobei das Ansteuern des Aktuators in einer Übersteuersituation nach Maßgabe des Schwimmwinkels erfolgt, **gekennzeichnet durch** die Schritte
   - Erfassen eines an lenkbaren Rädern des Fahrzeugs eingestellten Radeinschlagwinkels mittels eines Lenkwinkelsensors,
   - Feststellen einer Untersteuersituation anhand des Radeinschlagwinkels, des Schwimmwinkels und eines Fahrzeugmodells
   - Erzeugen von Stellanforderungen zur Beeinflussung des Fahrverhaltens in einer Untersteuersituation,

wobei der Geschwindigkeitssensor als optischer Geschwindigkeitssensor (111) zum Erfassen der Fahrzeugquergeschwindigkeit und/oder der Fahrzeuglängsgeschwindigkeit ausgeführt ist, der dazu ausgebildet ist, Licht, das an einer Fahrbahnoberfläche (303) reflektiert wird, auf der sich das Kraftfahrzeug (101) im Betrieb bewegt, zu erfassen und auszuwerten, um die Fahrzeugquergeschwindigkeit und/oder die Fahrzeuglängsgeschwindigkeit zu bestimmen.

**Claims**

1. System for stabilizing a motor vehicle (101), comprising:

   - at least one speed sensor (111) for sensing a longitudinal speed and a transversal speed of the motor vehicle (101);
   - a calculation unit (401) which is designed to calculate an attitude angle of the motor vehicle (101) from the sensed longitudinal speed and the sensed transversal speed;

- an evaluation unit (402) which is coupled to the calculation unit (401) and is designed to compare the attitude angle with a predefined threshold value and to detect an oversteering situation if the attitude angle exceeds the threshold value;

- an actuation unit (403) which is coupled to the evaluation unit (402), and an actuator (109) which influences the driving behavior of the motor vehicle (101), wherein the actuation unit (403) is designed to actuate the actuator (109) in an oversteering situation in accordance with the attitude angle, **characterized in that** an optical speed sensor (111) is provided for sensing the vehicle transversal speed and/or the vehicle longitudinal speed and is designed to sense and evaluate light which is reflected on a roadway surface (303) on which the motor vehicle (101) is moving during operation, in order to determine the vehicle transversal speed and/or the vehicle longitudinal speed, wherein the system also comprises a steering angle sensor (114) for sensing a wheel lock angle which is set at steerable wheels (102a, 102b) of the motor vehicle (101) and a further evaluation unit (501) which is designed to detect an understeering situation on the basis of the attitude angle, of the wheel lock angle and of a vehicle model, wherein the actuation unit (403) is coupled to the evaluation unit (501) and is designed to generate actuating requests for influencing the driving behaviour in an understeering situation.

2. System according to Claim 1, wherein the speed sensor (111) comprises a position-determining system, and wherein the vehicle transversal speed and/or the vehicle longitudinal speed are/is determined by tracking a position of the motor vehicle (101) by means of the position-determining system.

3. System according to one of the preceding claims, wherein the actuator (109) is designed to apply a braking force to a front wheel (102a; 102b) of the motor vehicle (101) on the basis of the actuation by the actuation unit (403) in an oversteering situation.

4. System according to one of the preceding claims, wherein the further evaluation unit (501) is designed to detect an understeering situation if the detected wheel lock angle is above the maximum possible wheel lock angle acquired on the basis of the longitudinal speed.

5. System according to one of the preceding claims, wherein the actuation unit (403) is designed to act on a drive engine (103) of the motor vehicle (101) in an understeering situation in such a way that a speed and/or acceleration of the motor vehicle (101) are/is reduced.

6. System according to one of the preceding claims, wherein the actuator (109) is designed to apply a braking force to a rear wheel (102c, 102d) of the motor vehicle (101) on the basis of actuation by the actuation unit (403) in an understeering situation.

7. System according to one of Claims 1 to 6, wherein the actuator (109) is configured in such a way that it can apply a braking force exclusively to the front wheels (102a, 102b) of the motor vehicle (101).

8. Method for stabilizing a motor vehicle (101), comprising the following steps:

- sensing of a longitudinal speed and of a transversal speed of the motor vehicle (101) by means of at least one speed sensor (111);
- calculation of an attitude angle of the motor vehicle (101) from the sensed vehicle longitudinal speed and the sensed vehicle transversal speed;
- comparison of the attitude angle with a predefined threshold value and detection of *an oversteering situation if the attitude angle exceeds the threshold value, and,
- if an oversteering situation has been detected, actuation of an actuator in order to influence the driving behavior of the motor vehicle (101),
- wherein the actuator is actuated in an oversteering situation in accordance with the attitude angle, **characterized by** the steps of
- sensing of a wheel lock angle set at steerable wheels of the vehicle by means of a steering angle sensor,
- detection of an understeering situation on the basis of the wheel lock angle, the attitude angle and a vehicle model,
- generation of actuating requests for influencing the driving behaviour in an understeering situation,

wherein the speed sensor is in the form of an optical speed sensor (111) for sensing the vehicle transversal speed and/or the vehicle longitudinal speed and is designed to sense and evaluate light which is reflected on a roadway surface (303) on which the motor vehicle (101) is moved during operation, in order to determine the vehicle transversal speed and/or the vehicle longitudinal speed.

**Revendications**

1. Système de stabilisation d'un véhicule automobile (101), comprenant :

   - au moins un capteur de vitesse (111) destiné à détecter une vitesse longitudinale et une vitesse transversale du véhicule automobile (101) ;
   - une unité de calcul (401) qui est conçue pour calculer, à partir de la vitesse longitudinale et de la vitesse transversale, un angle de dérive du véhicule automobile (101) ;
   - une unité d'évaluation (402) couplée à l'unité de calcul (401), qui est conçue pour comparer l'angle de dérive à une valeur de seuil prédéfinie et pour établir l'existence d'une situation de survirage lorsque l'angle de dérive dépasse la valeur de seuil ;
   - une unité de commande (403) couplée à l'unité d'évaluation (402) et un actionneur (109) influençant le comportement routier du véhicule automobile (101), dans lequel l'unité de commande (403) est conçue pour commander l'actionneur (109) en situation de survirage conformément à l'angle de dérive,

   **caractérisé en ce qu'**il est prévu, pour détecter la vitesse transversale du véhicule et/ou la vitesse longitudinale du véhicule, un capteur de vitesse optique (111) qui est conçu pour détecter et évaluer la lumière réfléchie sur une surface routière (303) sur laquelle le véhicule automobile (101) se déplace lors de son fonctionnement, afin de déterminer la vitesse transversale du véhicule et/ou la vitesse longitudinale du véhicule, dans lequel le système comprend en outre un capteur d'angle de direction (114) pour détecter un angle de braquage appliqué à des roues orientables (102a, 102b) du véhicule automobile (101) et une autre unité d'évaluation (501) qui est conçue pour établir une situation de sous-virage sur la base de l'angle de dérive, de l'angle de braquage, et d'un modèle de véhicule automobile, dans lequel l'unité de commande (403) est couplée à l'unité dévaluation (501) et est conçue pour générer des instructions de réglage destinées à influencer le comportement routier du véhicule dans une situation de sous-virage.

2. Système selon la revendication 1, dans lequel le capteur de vitesse (111) comprend un système de détermination de position et dans lequel la vitesse transversale du véhicule automobile et/ou la vitesse longitudinale du véhicule est déterminée sur la base d'un suivi d'une position du véhicule automobile (101) au moyen du système de détermination de position.

3. Système selon l'une quelconque des revendications précédentes, dans lequel l'actionneur (109) est conçu pour appliquer une force de freinage à une roue avant (102a ; 102b) du véhicule automobile (101) dans une situation de survirage sur la base de la commande effectuée par l'unité de commande (403).

4. Système selon l'une quelconque des revendications précédentes, dans lequel l'autre unité d'évaluation (501) est conçue pour établir une situation de sous-virage lorsque l'angle de braquage détecté se situe au-dessus de l'angle de braquage maximum admissible déterminé sur la base de la vitesse longitudinale.

5. Système selon l'une quelconque des revendications précédentes, dans lequel l'unité de commande (403) est conçue pour agir sur un moteur d'entraînement (103) du véhicule automobile (101) dans une situation de sous-virage de manière à réduire une vitesse et/ou une accélération du véhicule automobile (101).

6. Système selon l'une quelconque des revendications précédentes, dans lequel l'actionneur (109) est conçu pour appliquer une force de freinage à une roue arrière (102c ; 102d) du véhicule automobile (101) sur la base d'une commande effectuée par l'unité de commande (403) dans une situation de sous-virage.

7. Système selon l'une quelconque des revendications 1 à 6, dans lequel l'actionneur (109) est conçu pour pouvoir appliquer une force de freinage exclusivement aux roues avant (102a ; 102b) du véhicule automobile (101).

8. Procédé de stabilisation d'un véhicule automobile (101), comprenant les étapes consistant à :

   - détecter une vitesse longitudinale et une vitesse transversale du véhicule automobile (101) au moyen d'au moins un capteur de vitesse (111) ;
   - calculer un angle de dérive du véhicule automobile (101) à partir de la vitesse longitudinale détectée du véhicule automobile et de la vitesse transversale détectée du véhicule automobile ;

- comparer l'angle de dérive à une valeur de seuil prédéfinie et établir une situation de survirage lorsque l'angle de dérive dépasse la valeur de seuil,

- lorsqu'une situation de survirage a été établie, commander un actionneur afin d'influencer le comportement routier du véhicule automobile (101), dans lequel la commande de l'actionneur s'effectue dans une situation de survirage conformément à l'angle de dérive, **caractérisé par** les étapes consistant à

- détecter un angle de braquage appliqué à des roues orientables du véhicule automobile au moyen d'un capteur d'angle de direction,

- établir une situation de sous-virage sur la base de l'angle de braquage, de l'angle de dérive et d'un modèle de véhicule automobile,

- générer des commandes de réglage pour influencer le comportement routier dans une situation de sous-virage, dans lequel le capteur de vitesse est réalisé sous la forme d'un capteur de vitesse optique (111) pour détecter la vitesse transversale du véhicule automobile et/ou la vitesse longitudinale du véhicule automobile, qui est conçu pour détecter et évaluer la lumière réfléchie par une surface routière (303) sur laquelle le véhicule automobile (101) se déplace lors de son fonctionnement afin de déterminer la vitesse transversale du véhicule automobile et/ou la vitesse longitudinale du véhicule automobile.

**Fig. 1**

Fig. 2

Fig. 3

...

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19515051 A1
- DE 19533575 A1
- DE 102004060677 A1

**In der Beschreibung aufgeführte Nicht-Patentliteratur**

- **M.H. KOELINK et al.** Laser Doppler velocimeter based on the self-mixing effect in a fibre-coupled semiconductor laser: theory. *Applied Optics,* 1992, vol. 31, 3401-3408